# FASCICULE DE BREVET EUROPEEN

(11) **EP 2 102 970 B1**
(45) Date de publication et mention de la délivrance du brevet: **16.05.2018**
(21) Numéro de dépôt: 07805361.8
(22) Date de dépôt: 09.08.2007
(51) Int. Cl.: H02K 5/24, H02K 5/20, F04D 25/08

(54) **GROUPE MOTO VENTILATEUR A REFROIDISSEMENT AMELIORE**
MOTORGETRIEBENE LÜFTEREINHEIT MIT VERBESSERTER KÜHLUNG
MOTOR-DRIVEN FAN UNIT WITH IMPROVED COOLING

(30) Priorité: 28.08.2006 FR 0607563
(43) Date de publication de la demande: 23.09.2009
(73) Titulaire: Valeo Systèmes Thermiques, 78320 Le Mesnil Saint Denis (FR)
(72) Inventeur: COLLET, Anthony, 78310 Maurepas (FR); SICOT, Claire, 78280 Guyancourt (FR); LEBECQ, Olivier, 78390 Bois D'arcy (FR); LONGATTE, Florent, 78120 Rambouillet (FR)
(74) Mandataire: Metz, Gaëlle
(86) Numéro de dépôt international: PCT/IB2007/053169
(87) Numéro de publication internationale: WO 2008/026116

(56) Documents cités:
- EP-A- 1 688 622
- WO-A-2004/093294
- DE-A1- 4 438 747
- FR-A1- 2 838 252
- FR-A1- 2 877 419

## Description

L'invention concerne un dispositif de maintien d'un moteur électrique, notamment pour un groupe moto ventilateur particulièrement adapté pour les installations de chauffage, ventilation et/ou climatisation.

Elle concerne plus particulièrement un dispositif de maintien d'un moteur électrique disposant d'un refroidissement amélioré.

On connaît déjà un dispositif pour supporter un moteur électrique entraînant une turbine. Il comprend un boîtier délimitant un logement de réception de l'enveloppe du moteur comprenant une paroi périphérique raccordée à une paroi frontale. La paroi périphérique est interrompue pour définir un canal pour le refroidissement du moteur. Le canal est délimité par deux parois latérales se raccordant à la paroi frontale par une paroi déflectrice inclinée. Un tel dispositif est décrit, notamment, dans les demandes de brevet FR-A-2 836 730, EP-A-0 805 276, DE-A-44 38 747 et FR-A-2 877 419. De tels agencements permettent le refroidissement du moteur électrique par des canaux de refroidissement formés dans le boîtier supportant le moteur destinés à dériver une fraction du flux d'air mis en mouvement par la turbine.

Néanmoins, de tels dispositifs ne sont pas optimisés afin d'assurer un parfait refroidissement car ils apportent un flux d'air à la base du moteur. Au final, une portion de ce flux d'air pénètre dans l'enveloppe du moteur pour assurer le refroidissement de celui-ci alors que la portion résiduelle contourne l'enveloppe du moteur et ne contribue donc pas à l'abaissement de la température du moteur.

De plus, dans les installations disposant de groupes moto ventilateur à double turbine, il est difficile, du fait de l'absence de support de moteur électrique fermé tel que décrits dans FR-A-2 836 730 et EP-A-0 805 276, de créer des canaux dédiés au refroidissement permettant d'assurer une bonne circulation de flux d'air dans l'enveloppe du moteur afin de le refroidir.

Le document WO -A- 2004 093284 décrit un dispositif selon le préambule de la revendication 1. L'objet de la présente invention est de surmonter les inconvénients précités. A cet effet, l'invention propose une groupe moto-ventilateur comprenant un support de moteur définissant un dispositif de maintien avec des moyen d'obturation selon la revendication 1 et le dispositif de maintien comprenant un logement d'accueil du moteur électrique comportant une paroi et des moyens d'obturation qui sont disposés entre le moteur électrique et la paroi du logement d'accueil.

Grâce à l'invention, il est possible de créer un obstacle au passage d'un flux d'air entre le moteur électrique et la paroi du logement d'accueil. Il en résulte que le flux d'air privilégiera une circulation à travers le moteur électrique contribuant ainsi à son refroidissement.

De plus, selon une alternative de réalisation, les moyens d'obturation comportent une première partie reliée au moteur électrique et au moins une seconde partie reliée au logement d'accueil.

Alternativement, les moyens d'obturation relient le moteur électrique et le logement d'accueil et sont, notamment, réalisés par une pièce unitaire.

Selon un mode de réalisation, la première partie et la seconde partie des moyens d'obturation sont disjointes. Dans un tel agencement, la première partie et la seconde partie des moyens d'obturation coopèrent entre elles par complémentarité de forme et/ou forme un labyrinthe pour un flux d'air.

Selon un autre mode préféré de réalisation, les moyens d'obturation sont constitués par un insert agencé entre le moteur électrique et la paroi du logement d'accueil.

Selon diverses variantes de réalisation, l'insert agencé est constitué par une pièce massive ou au moins par une lame. De façon préférentielle, la lame et/ou la pièce massive constituant l'insert est en mousse ou en élastomère ou en caoutchouc. Alternativement ou complémentairement, la lame et/ou la pièce massive constituant l'insert est une combinaison de plastique rigide et de plastique souple.

Selon l'invention le premier organe de propulsion d'air comporte un bol fermé et le second organe de propulsion d'air comporte un bol ouvert.

De plus, il propose un groupe moto ventilateur comportant un support de moteur électrique logeant un moteur électrique et disposant d'un dispositif de maintien du moteur électrique ayant une des caractéristiques précédemment décrites. Ledit groupe moto-ventilateur est agencé au moins une volute comportant au moins un canal de refroidissement du moteur électrique. En réalisation alternative ou en combinaison, au moins une volute comporte au moins une collerette conique de refroidissement du moteur électrique.

D'autres avantages et caractéristiques de l'invention apparaîtront à la lecture de la description qui suit. Cette description est purement illustrative et donnée à titre d'exemple et doit être lue en se référant aux dessins annexés sur lesquels:
- la figure 1 est une vue en perspective d'un boîtier d'un dispositif de chauffage, ventilation et/ou climatisation comportant un groupe moto ventilateur disposant d'un dispositif de maintien selon la présente invention,
- la figure 2 est une vue en perspective du groupe moto ventilateur ayant un dispositif de maintien selon la présente invention,
- la figure 3 est une vue en perspective éclatée montrant l'assemblage des deux parties du dispositif de maintien du moteur autour de la bague du groupe moto ventilateur selon la présente invention,
- les figures 4 et 5 sont, respectivement, une vue en coupe selon le plan médian A de la figure 3 et une coupe selon B-B de la figure 3 d'une première variante de réalisation selon la présente invention.
- les figures 6 et 7 sont, respectivement, une vue en coupe selon le plan médian A de la figure 3 et une coupe selon B-B de la figure 3 d'une deuxième variante de réalisation selon la présente invention.
- les figures 8 et 9 sont, respectivement, une vue en coupe selon le plan médian A de la figure 3 et une coupe selon B-B de la figure 3 d'une troisième variante de réalisation selon la présente invention.

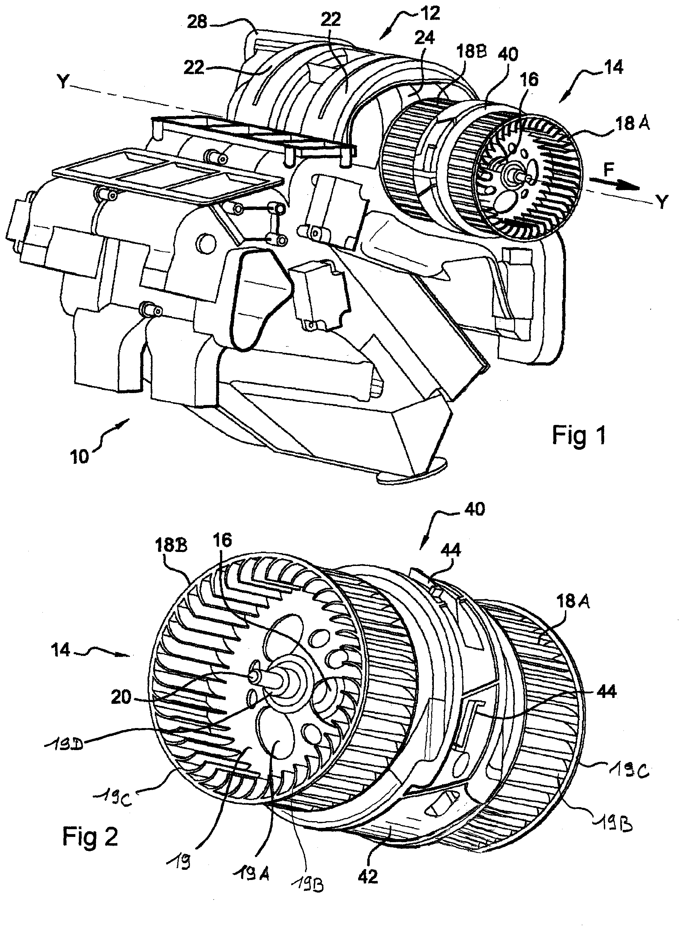

La figure 1 représente un boîtier 10 d'un dispositif de chauffage, ventilation et/ou climatisation de véhicule automobile. Un tel boîtier est propre à être implanté dans la planche de bord du véhicule, généralement dans l'habitacle d'un véhicule automobile. La structure générale du dispositif ne sera pas décrite en détail, s'agissant de caractéristiques en elles-mêmes connues.

Le boîtier 10 comporte, en partie supérieure, une enveloppe 12, ainsi qu'un groupe moto ventilateur 14 propre à être reçu de manière amovible dans l'enveloppe 12 dans une position de montage. Le groupe moto ventilateur 14 comprend un moteur électrique central 16 (non visible sur le dessin) entraînant deux turbines 18A et 18B disposées sur l'axe ou arbre 20 du moteur et de part et d'autre de ce dernier. Les turbines 18A et 18B sont propres à être reçues respectivement dans deux volutes 22 de l'enveloppe 12 qui permettent un guidage et une accélération d'un flux d'air lorsque les turbines sont entraînées en rotation par le moteur.

Les turbines 18A et 18B sont de formes connues. Elles comprennent une série de pales 19B reliées entre elles par une couronne 19C. La série de pale est raccordée à un moyeu 19D par un bol 19. La forme et la géométrie du bol 19 sont également connues en soi. Le bol 19 peut comporter des ouvertures 19A afin de constituer un bol ouvert ou, à l'inverse, être plein et exempt de toute ouverture afin de réaliser un bol fermé.

Le boîtier 10 comporte des ouvertures d'accès 24 situées latéralement dans une région d'extrémité de l'enveloppe 12 et dans la direction d'un axe de montage YY qui correspond à l'axe commun de l'arbre 20 du moteur électrique 16 et des turbines 18A et 18B et des volutes 22. Le groupe moto ventilateur 14 peut ainsi être monté, mais surtout démonté par un déplacement axial dans la direction de l'axe YY qui correspond à la direction axiale de l'arbre du moteur 16. Sur la figure 1, le groupe moto ventilateur 14 est représenté dans une position en cours d'extraction, cette opération d'extraction s'effectuant dans la direction de la flèche F, suivant l'axe YY.

Bien évidemment, le groupe moto ventilateur 14 peut être monté dans le boîtier 10, et plus particulièrement dans l'enveloppe 12, selon un mode opératoire différent de celui décrit précédemment. Notamment, un montage par démontage de la partie supérieure de l'enveloppe 12 est envisageable.

Les ouvertures d'accès 24 constituent également l'entrée d'air des deux volutes 22, figurant des côtés droit et gauche du boîtier 10 selon l'exemple décrit en figure 1.

L'ouverture d'accès 24, formant entrée d'air, est munie d'un conduit d'admission d'air droit (non représenté) et un conduit d'admission d'air gauche 28.

On peut concevoir, en variante, que ce conduit 28 soit également réalisé démontable pour permettre le montage ou le démontage du groupe moto ventilateur 14 suivant l'un ou l'autre des côtés du boîtier.

Ainsi, un flux d'air prélevé dans l'habitacle et/ou à l'extérieur du véhicule est admis dans l'enveloppe au travers des conduits 26 et 28, accéléré dans les volutes 22 par les turbines respectives 18A et 18B et pulsé dans le boîtier 10.

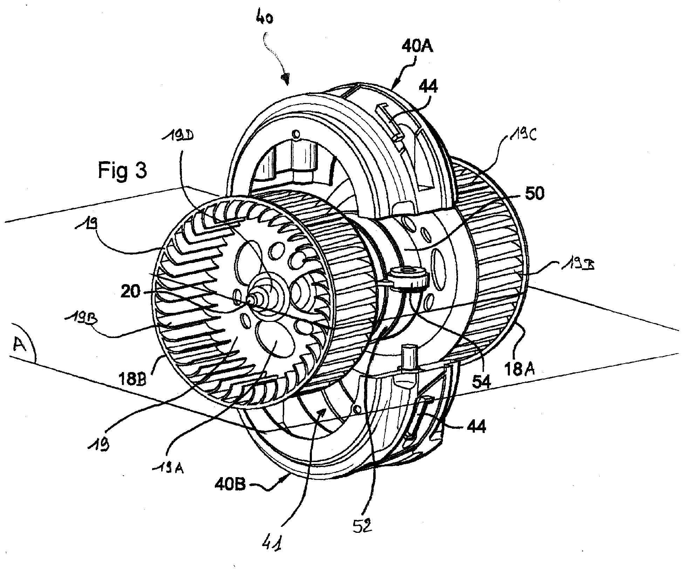

On se réfère dorénavant aux figures 2 et 3 qui présentent le groupe moto ventilateur 14 seul qui comprend un support moteur 40, définissant un dispositif de maintien, de forme générale annulaire qui entoure le moteur électrique 16 et qui est disposé entre les deux turbines 18A et 18B. Le support moteur 40 comporte une paroi extérieure 42 de forme générale cylindrique circulaire. Selon l'exemple de réalisation, le diamètre de la paroi extérieure 42 du support moteur 40 est supérieur au diamètre des turbines 18A et 18B, mais inférieur au diamètre de la paroi intérieure de l'enveloppe 12 du boîtier 10. À la périphérie de la paroi extérieure 42 sont formés des ergots 44 en saillie propres à coopérer respectivement avec des découpes agencées sur la partie réceptrice de l'enveloppe 12.

Le montage du groupe moto ventilateur 14 à l'intérieur de l'enveloppe 12 est obtenu par un verrouillage par rotation du support moteur dans l'enveloppe suivant une fraction de tour, par exemple un quart de tour, dans un sens donné par engagement des ergots 44 du support moteur 40 dans les découpes respectives prévues dans l'enveloppe 12. Autrement dit, on réalise ainsi un verrouillage du type baïonnette ou fraction de tour.

Une bague 50 est conçue pour être prise en sandwich entre le moteur électrique 16 et le support moteur 40. La bague 50 est montée autour du moteur électrique 16 et est réalisée avantageusement en matière plastique. Elle comporte une paroi cylindrique 52 de section générale circulaire et des amortisseurs 54 pour assurer le montage du support moteur 40 dans des conditions propres à amortir les vibrations du moteur.

Comme on le voit plus particulièrement sur la figure 3, le support moteur 40 comprend deux parties 40A et 40B, chacune en forme de demi-anneau, propres à être assemblées entre elles et autour de la bague 50 qui entoure le moteur électrique 16. L'assemblage des deux parties 40A et 40B définit un logement 41 pour accueillir le moteur 16. On aperçoit également sur la figure 3 les ergots 44 assurant le verrouillage du support moteur dans l'enveloppe 12 du boîtier 10.

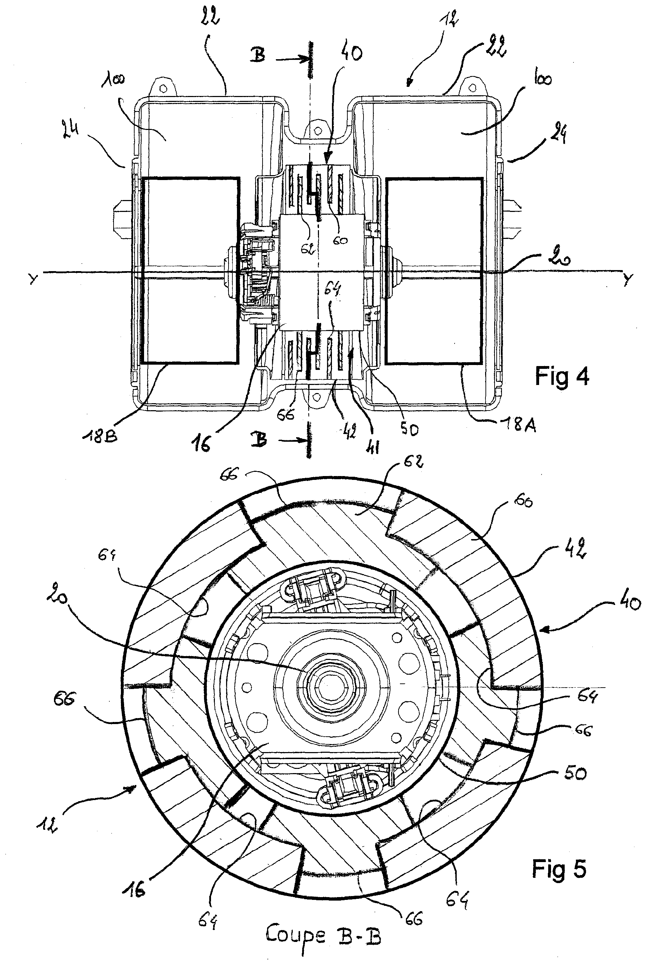

Les exemples de réalisation qui vont être décrits dorénavant se basent sur le groupe moto ventilateur tel que décrit précédemment. En conséquence, de nombreuses références détaillées en relation avec les figures 1 à 3 seront reprises dans la description des figures 4 à 9 pour les éléments communs.

Selon un premier exemple de réalisation, les figures 4 et 5 présentent un support moteur 40 présentant des moyens d'obturation 60 et 62 disposés entre le moteur 16 et la paroi extérieure 42 du support moteur 40.

Selon cette variante, les moyens d'obturation sont réalisés par des lamelles 60 et 62 intercalées entre le moteur 16 et le support moteur 40. Plus particulièrement, un premier jeu de lamelles 60 est relié par une extrémité à la paroi extérieure 42 du support moteur 40. Les lamelles 60 comportent une seconde extrémité constituée par un bord 64. Le bord 64 est distant de la paroi extérieure 42 du support moteur 40 d'une distance inférieure à la distance séparant la paroi extérieure 42 du support moteur 40 et le moteur 16. Plus précisément, si le moteur comporte une bague 50 servant au montage du moteur 16 dans le support moteur 40, la dimension radiale du bord 64 est inférieure à la distance séparant la paroi extérieure 42 du support moteur 40 et la bague 50 enserrant le moteur 16.

La paroi extérieure 42 du support moteur 40 est pourvue de plusieurs lamelles 60. Dans l'exemple de la figure 4, elles sont au nombre de trois. Elles sont décalées axialement, selon la direction de l'axe YY.

De façon similaire, un second jeu de lamelles 62 est relié par une extrémité à la bague 50 servant à maintenir le moteur 16 dans le support moteur 40. Les lamelles 62 comportent une seconde extrémité constituée par un bord 66. Le bord 66 est distant de la paroi extérieure de la bague 50 d'une distance inférieure à la distance séparant la paroi extérieure 42 du support moteur 40 et la bague 50.

La bague 50 comporte plusieurs lamelles 62. Dans l'exemple de la figure 4, elles sont au nombre de trois. Elles sont décalées axialement, selon la direction de l'axe YY.

L'agencement des lamelles 60 et 62 est telle qu'elles s'alternent respectivement. Ainsi, en se déplaçant selon la direction de l'axe YY et de gauche à droite sur la figure 4, on trouve ainsi une première lamelle 60 puis une première lamelle 62, ensuite une deuxième lamelle 60 à laquelle succède une deuxième lamelle 62 et au final une troisième et dernière lamelle 60 et une troisième et dernière lamelle 62.

Ainsi, la disposition des lamelles 60 et 62 sont agencées de telle façon qu'elle crée un labyrinthe pour un flux d'air en provenance des chambres intérieures 100 des volutes 22. En effet, par un effet de dépressions, un flux d'air se crée entre les deux chambres intérieures 100 des volutes 22. Par l'arrangement des lamelles, une perte de charge additionnelle est créée entre la bague 50 et la paroi extérieure 42 du support moteur 40. Le flux d'air privilégie donc naturellement un trajet plus simple et comportant moins d'obstacles et donc de pertes de charges. Pour se faire, il traverse le moteur 16 assurant ainsi le refroidissement de ce dernier en évacuant les calories produites par la mise en fonctionnement des parties tournantes comprises à l'intérieur du moteur 16.

L'air provenant de la chambre 100 circule dans le canal de refroidissement. Il traverse alors le moteur en passant le long des balais et du rotor du moteur. Le refroidissement se fait grâce à la circulation de l'air le long de ces deux éléments constitutifs du moteur électrique. L'air ressort du moteur électrique par la face opposée à celle de son entrée.

L'exemple décrit aux figures 4 et 5 comprend 3 jeux de lamelles 60 et 62. Toutefois, ce nombre n'est pas limitatif. Il est possible, notamment selon les besoins et la perte de charges désirée, d'augmenter ou de diminuer le nombre de jeux de lamelles 60 et 62.

De même, la structure des jeux de lamelles 60 et 62 présentés dans cet exemple définit un labyrinthe pour le flux d'air. Néanmoins, la présente invention couvre également tous les autres exemples de réalisation permettant de créer des obstacles dans l'espace compris entre la bague 50 et la paroi extérieure 42 du support moteur 40. Notamment, il est envisageable d'avoir des éléments coopérant par complémentarité de forme, des éléments de forme sinusoïdale.

Selon une autre alternative de cet exemple de réalisation, afin de faciliter le montage de l'ensemble dans le support moteur 40, les jeux de lamelles 60 et 62 sont montés sur un insert qui constitue une pièce autonome. Cet insert est introduit dans l'espace entre la paroi extérieure 42 du support moteur 40 et la bague 50 du moteur 16. Les dimensions de l'insert sont telles qu'il vient parfaitement s'insérer contre la paroi extérieure 42 et la bague 50 sans laisser persister de jeu.

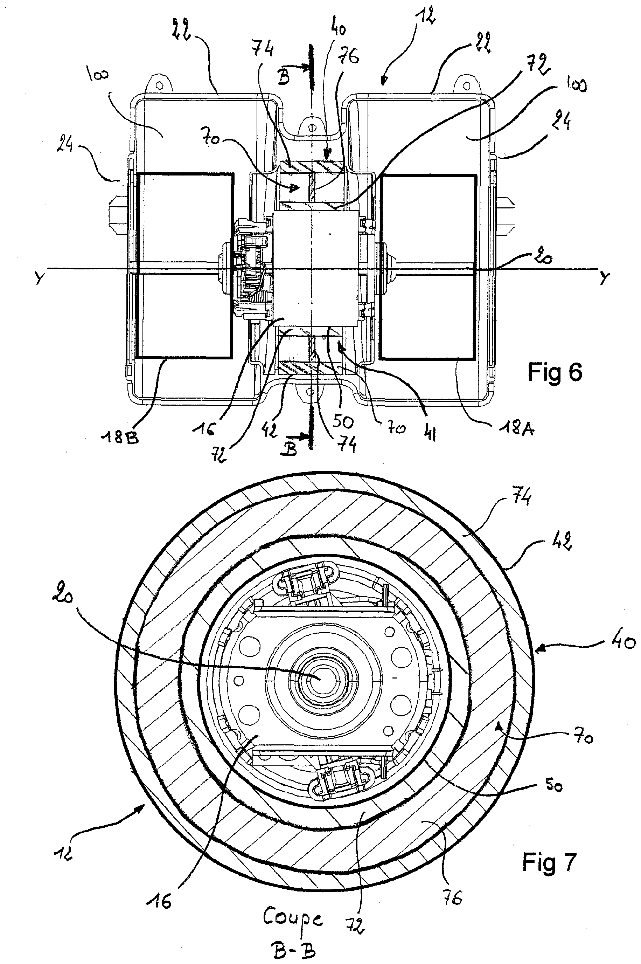

Une deuxième alternative de réalisation est présentée aux figures 6 et 7. Selon le mode de réalisation présenté, un insert 70 est disposé dans l'espace compris entre la paroi extérieure 42 du support moteur 40 et la bague 50 du moteur 16. Cet insert 70 comporte une bague intérieure 72 et une bague extérieure 74. Les bagues 72 et 74 sont ajustées afin qu'elles coopèrent parfaitement respectivement avec la bague 50 et la paroi extérieure 42 afin qu'aucun jeu ne subsiste entre ces éléments.

Pour obturer l'espace résiduel, la bague intérieure 72 et la bague extérieure 74 sont reliées par une lame 76. Une lame est un organe dont l'épaisseur est relativement faible, notamment inférieure à 10 mm. Dans de telles circonstances, la lame 76 est comparable à une membrane ou à une pièce surfacique. De façon préférentielle, les bagues 72 et 74 sont en plastique rigide, notamment du polypropylène, alors que la lame 76 est plastique souple, notamment en élastomère, par exemple en SEBS (styrène-éthylène-butène (ou butylène)-styrène), ou elle peut être en caoutchouc.

La coopération d'une matière plastique rigide et d'une matière plastique souple permet de conserver la flexibilité nécessaire à supporter les mouvements vibratoires du moteur 16.

L'adjonction de l'insert 70 permet de fermer totalement l'espace entre la paroi extérieure 42 du support moteur 40 et la bague 50. Ainsi, aucun flux d'air ne peut traverser cet espace. Il traverse le moteur 16 assurant ainsi le refroidissement et ce dernier en évacuant les calories produites par la mise en fonctionnement des parties tournantes comprises à l'intérieur du moteur 16.

Selon une variante non représentée, il est envisageable de directement disposer la membrane 76 entre la paroi extérieure 42 du support moteur 40 et la bague 50.

L'exemple décrit aux figures 6 et 7 comprend une seule membrane 76. Toutefois, il est possible de disposer un nombre plus important de membranes entre les bagues 72 et 74.

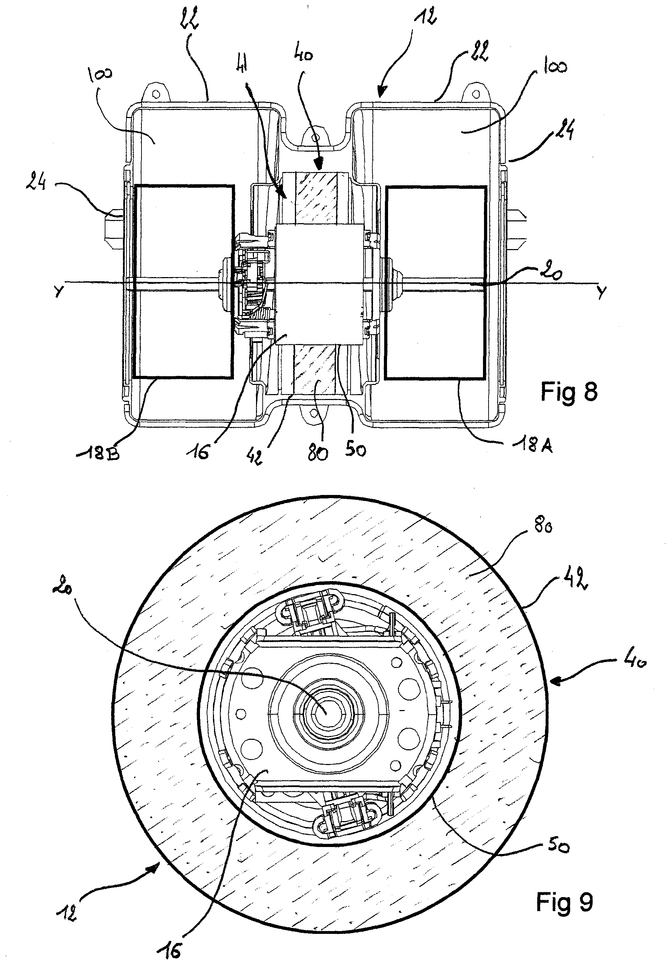

Les figures 8 et 9 présentent une troisième variante de réalisation de la présente invention. Cet exemple de réalisation fait intervenir un agencement simplifié. En effet, l'espace compris entre la paroi extérieure 42 du support moteur 40 et la bague 50 est rempli par une pièce massive 80, par exemple un bloc, de mousse. Une pièce massive est un organe dont l'épaisseur est relativement importante, notamment supérieure à 10 mm. Ainsi, la pièce massive 80 est assimilable à une pièce volumique. La mousse constituant le bloc 80 est à pore ouvert ou à pore fermée. Il est donc possible que le bloc 80 se comprime ou se détende selon les mouvements vibratoires du moteur 16.

En particulier, le bloc 80 peut être réalisé en EPDM (terpolymère d'éthylène, de propylène et d'un diène, tel que le hexadiène), en PU (polyurethane) ou en PE (polyethylene) .

Les divers exemples décrits précédemment font intervenir des moyens d'obturation afin de générer une perte de charges additionnelle dans un espace. Toutefois, la présente invention couvre également tous moyens dont les formes géométriques et les dispositions fournissent les mêmes effets.

De façon préférentielle, au moins une des turbines 18A et 18B comprend un bol 19 comportant des ouvertures 19A afin de constituer un bol ouvert. Un tel agencement permet de créer une dépression générant une aspiration de l'air à travers le moteur afin de sortir par le bol 19 ouvert. On facilite ainsi la circulation de l'air dans le moteur et on améliore le refroidissement de celui-ci.

Dans les dispositifs faisant intervenir deux turbines 18A et 18B, il est prévu suivant l'invention qu'une première turbine 18A soit du type à bol fermé alors qu'une seconde turbine 18B soit du type à bol ouvert.

De même, afin de faciliter la circulation de l'air dans le dispositif de maintien, il est possible d'intégrer une paroi de volute 22 particulièrement adaptée pour conduire l'air à travers le moteur. Il est possible par exemple d'agencer une paroi de volute 22 en forme d'anneau conique ou en forme de canaux définissant un 'L'. Une telle géométrie est définie dans EP-A-0 805 276.

L'ensemble des exemples de réalisation décrits précédemment n'est pas limitatif. La présente invention couvre également les combinaisons des divers modes de réalisation entre eux.

La présente invention trouve une application particulière dans les installations de chauffage, ventilation et/ou climatisation de véhicules automobiles dans lesquels un dispositif selon la présente invention est incorporé au tableau de bord du véhicule pour la commande des divers paramètres de l'installation de chauffage, ventilation et/ou climatisation.

Bien évidemment, l'invention n'est pas limitée aux modes de réalisation décrits précédemment et fournis uniquement à titre d'exemple et englobe d'autres variantes de réalisation que pourra envisager l'homme du métier dans le cadre des revendications.

## Revendications

1. Groupe moto-ventilateur pour installation de chauffage, ventilation et/ou climatisation de véhicule automobile comportant :
- un moteur électrique (16) qui met en rotation un premier (18A) et un second organe (18B) de propulsion d'air, lesdits premier et second organes (18A, 18B) de propulsion d'air étant des turbines ;
- un support de moteur (40) électrique logeant le moteur électrique (16) ;
ledit support de moteur (40), définit un dispositif de maintien du moteur électrique (16), de forme générale annulaire qui entoure le moteur électrique (16) et qui est disposé entre les deux turbines (18A et 18B), ledit dispositif de maintien (40) comprenant un logement d'accueil (41) du moteur électrique (16) et comportant une paroi (42), et les moyens d'obturation (60, 62; 72, 74, 76; 80) sont disposés entre le moteur électrique (16) et la paroi (42) du logement d'accueil (41), **caractérisé en ce que** ledit premier organe (18A) de propulsion d'air comportant un bol fermé et ledit second organe (18B) de propulsion d'air comportant un bol ouvert.

2. Groupe moto-ventilateur selon la revendication 1, dans lequel les moyens d'obturation (60, 62; 72, 74, 76; 80) comportent une première partie (62, 72, 80) reliée au moteur électrique (16) et au moins une seconde partie (60, 74, 80) reliée à la paroi (42) du logement d'accueil (41).

3. Groupe moto-ventilateur selon la revendication 1 ou 2, dans lequel les moyens d'obturation (60, 62; 72, 74, 76; 80) relient le moteur électrique (16) et la paroi (42) du logement d'accueil (41).

4. Groupe moto-ventilateur selon l'une des revendications précédentes, dans lequel les moyens d'obturation (72, 74, 76; 80) sont réalisés par une pièce unitaire.

5. Groupe moto-ventilateur selon l'une des revendications 1 à 3, dans lequel la première partie (62) et la seconde partie (60) des moyens d'obturation (60, 62) sont disjointes.

6. Groupe moto-ventilateur selon la revendication 5, dans lequel la première partie (62) et la seconde partie (60) des moyens d'obturation (60, 62) coopèrent entre elles par complémentarité de forme.

7. Groupe moto-ventilateur selon la revendication 6, dans lequel la complémentarité de forme de la première partie (62) et la seconde partie (60) forment un labyrinthe pour un flux d'air.

8. Groupe moto-ventilateur selon l'une des revendications 1 à 4, dans lequel les moyens d'obturation (72, 74, 76; 80) sont constitués par un insert agencé entre le moteur électrique (16) et la paroi (42) du logement d'accueil (41).

9. Groupe moto-ventilateur selon la revendication 8, dans lequel l'insert (72, 74, 76; 80) agencé est constitué par une pièce massive (80).

10. Groupe moto-ventilateur selon la revendication 8, dans lequel l'insert (72, 74, 76; 80) agencé est constitué au moins par une lame (74).

11. Groupe moto-ventilateur selon la revendication 9 ou 10, dans lequel la lame (74) et/ou la pièce massive (80) constituant l'insert est en mousse.

12. Groupe moto-ventilateur selon la revendication 9 ou 10, dans lequel la lame (74) et/ou la pièce massive (80) constituant l'insert est en élastomère.

13. Groupe moto-ventilateur selon la revendication 9 ou 10, dans lequel la lame (74) et/ou la pièce massive (80) constituant l'insert est en caoutchouc.

14. Groupe moto-ventilateur selon l'une des revendications 10 à 13, dans lequel la lame (74) et/ou la pièce massive (80) constituant l'insert est une combinaison de plastique rigide et de plastique souple.

15. Groupe moto-ventilateur selon la revendication 1, dans lequel est agencé au moins une volute (22) comportant au moins un canal de refroidissement du moteur électrique (16).

16. Groupe moto-ventilateur selon la revendication 1 ou 15, dans lequel est agencé au moins une volute (22) comportant au moins une collerette conique de refroidissement du moteur électrique (16).

## Patentansprüche

1. Gebläseeinheit für eine Heiz-, Belüftungs- und/oder Klimaanlage eines Kraftfahrzeugs, welche aufweist:
- einen elektrischen Motor (16), welcher ein erstes (18A) und ein zweites (18B) Luftbeschleunigungsorgan in Rotation versetzt, wobei das erste und das zweite Luftbeschleunigungsorgan (18A, 18B) Turbinen sind;
- eine Elektromotorhalterung (40), die den elektrischen Motor (16) aufnimmt;
wobei die Motorhalterung (40) eine Haltevorrichtung des elektrischen Motors (16) von ringförmiger allgemeiner Gestalt definiert, welche den elektrischen Motor (16) umgibt und welche zwischen den zwei Turbinen (18A und 18B) angeordnet ist, wobei die Haltevorrichtung (40) eine Aufnahme (41) für den elektrischen Motor (16) umfasst und eine Wand (42) aufweist,
und die Verschlussmittel (60, 62; 72, 74, 76; 80) zwischen dem elektrischen Motor (16) und der Wand (42) der Aufnahme (41) angeordnet sind,
**dadurch gekennzeichnet, dass** das erste Luftbeschleunigungsorgan (18A) eine geschlossene Schüssel aufweist und das zweite Luftbeschleunigungsorgan (18B) eine offene Schüssel aufweist.

2. Gebläseeinheit nach Anspruch 1, wobei die Verschlussmittel (60, 62; 72, 74, 76; 80) einen ersten Teil (62, 72, 80), der mit dem elektrischen Motor (16) verbunden ist, und wenigstens einen zweiten Teil (60, 74, 80), der mit der Wand (42) der Aufnahme (41) verbunden ist, aufweist.

3. Gebläseeinheit nach Anspruch 1 oder 2, wobei die Verschlussmittel (60, 62; 72, 74, 76; 80) den elektrischen Motor (16) und die Wand (42) der Aufnahme (41) verbinden.

4. Gebläseeinheit nach einem der vorhergehenden Ansprüche, wobei die Verschlussmittel (72, 74, 76; 80) durch ein einzelnes Teil realisiert sind.

5. Gebläseeinheit nach einem der Ansprüche 1 bis 3, wobei der erste Teil (62) und der zweite Teil (60) der Verschlussmittel (60, 62) disjunkt sind.

6. Gebläseeinheit nach Anspruch 5, wobei der erste Teil (62) und der zweite Teil (60) der Verschlussmittel (60, 62) durch Formkomplementarität zusammenwirken.

7. Gebläseeinheit nach Anspruch 6, wobei die Formkomplementarität des ersten Teils (62) und des zweiten Teils (60) ein Labyrinth für einen Luftstrom bilden.

8. Gebläseeinheit nach einem der Ansprüche 1 bis 4, wobei die Verschlussmittel (72, 74, 76; 80) aus einem Einsatz bestehen, der zwischen dem elektrischen Motor (16) und der Wand (42) der Aufnahme (41) angeordnet ist.

9. Gebläseeinheit nach Anspruch 8, wobei der angeordnete Einsatz (72, 74, 76; 80) aus einem massiven Teil (80) besteht.

10. Gebläseeinheit nach Anspruch 8, wobei der angeordnete Einsatz (72, 74, 76; 80) aus wenigstens einer Lamelle (74) besteht.

11. Gebläseeinheit nach Anspruch 9 oder 10, wobei die Lamelle (74) und/oder das massive Teil (80), die bzw. das den Einsatz bildet, aus Schaumstoff besteht.

12. Gebläseeinheit nach Anspruch 9 oder 10, wobei die Lamelle (74) und/oder das massive Teil (80), die bzw. das den Einsatz bildet, aus Elastomer besteht.

13. Gebläseeinheit nach Anspruch 9 oder 10, wobei die Lamelle (74) und/oder das massive Teil (80), die bzw. das den Einsatz bildet, aus Gummi besteht.

14. Gebläseeinheit nach einem der Ansprüche 10 bis 13, wobei die Lamelle (74) und/oder das massive Teil (80), die bzw. das den Einsatz bildet, eine Kombination von hartem Kunststoff und weichem Kunststoff ist.

15. Gebläseeinheit nach Anspruch 1, in welcher wenigstens ein Spiralgehäuse (22) angeordnet ist, das wenigstens einen Kanal zur Kühlung des elektrischen Motors (16) aufweist.

16. Gebläseeinheit nach Anspruch 1 oder 15, in welcher wenigstens ein Spiralgehäuse (22) angeordnet ist, das wenigstens einen kegelförmigen Bund zur Kühlung des elektrischen Motors (16) aufweist.

## Claims

1. Motorized fan unit for a heating, ventilation and/or air-conditioning installation of a motor vehicle, comprising:
- an electric motor (16) which rotates a first air-propulsion member (18A) and a second air-propulsion member (18B), the said first and second air-propulsion members (18A, 18B) being turbines;
- an electric motor support (40) housing the electric motor (16);
the said motor support (40) defining a device for retaining the electric motor (16), the device being of annular general shape and surrounding the electric motor (16) and being arranged between the two turbines (18A and 18B), the said retaining device (40) comprising a reception housing (41) for the electric motor (16) and comprising a wall (42), and the shut-off means (60, 62; 72, 74, 76; 80) being arranged between the electric motor (16) and the wall (42) of the reception housing (41), **characterized in that** the said first air-propulsion member (18A) comprises a closed bowl and the said second air-propulsion member (18B) comprises an open bowl.

2. Motorized fan unit according to Claim 1, in which the shut-off means (60, 62; 72, 74, 76; 80) comprise a first portion (62, 72, 80) connected to the electric motor (16) and at least one second portion (60, 74, 80) connected to the wall (42) of the reception housing (41).

3. Motorized fan unit according to Claim 1 or 2, in which the shut-off means (60, 62; 72, 74, 76; 80) connect the electric motor (16) and the wall (42) of the reception housing (41).

4. Motorized fan unit according to one of the preceding claims, in which the shut-off means (72, 74, 76; 80) take the form of a unitary part.

5. Motorized fan unit according to one of Claims 1 to 3, in which the first portion (62) and the second portion (60) of the shut-off means (60, 62) are separate.

6. Motorized fan unit according to Claim 5, in which the first portion (62) and the second portion (60) of the shut-off means (60, 62) cooperate with one another by shape complementarity.

7. Motorized fan unit according to Claim 6, in which the shape complementarity of the first portion (62) and the second portion (60) form a labyrinth for an air flow.

8. Motorized fan unit according to one of Claims 1 to 4, in which the shut-off means (72, 74, 76; 80) are constituted by an insert arranged between the electric motor (16) and the wall (42) of the reception housing (41).

9. Motorized fan unit according to Claim 8, in which the arranged insert (72, 74, 76; 80) is constituted by a solid part (80).

10. Motorized fan unit according to Claim 8, in which the arranged insert (72, 74, 76; 80) is constituted at least by a blade (74).

11. Motorized fan unit according to Claim 9 or 10, in which the blade (74) and/or the solid part (80) constituting the insert is made of foam.

12. Motorized fan unit according to Claim 9 or 10, in which the blade (74) and/or the solid part (80) constituting the insert is made of elastomer.

13. Motorized fan unit according to Claim 9 or 10, in which the blade (74) and/or the solid part (80) constituting the insert is made of rubber.

14. Motorized fan unit according to one of Claims 10 to 13, in which the blade (74) and/or the solid part (80) constituting the insert is a combination of rigid plastic and of flexible plastic.

15. Motorized fan unit according to Claim 1, in which there is arranged at least one blower housing (22) comprising at least one duct for cooling the electric motor (16).

16. Motorized fan unit according to Claim 1 or 15, in which there is arranged at least one blower housing (22) comprising at least one conical flange for cooling the electric motor (16).
